# EUROPEAN PATENT APPLICATION

(11) **EP 3 210 873 A1**
(43) Date of publication of application: **30.08.2017**
(21) Application number: 17157782.8
(22) Date of filing: 24.02.2017
(51) Int. Cl.: B63B 21/16, B65H 59/22

(54) **LINE TENSIONER**

(30) Priority: 25.02.2016 NO 20160322
(71) Applicant: MacGregor Norway AS, 4808 Arendal (NO)
(72) Inventor: KIPPERNES, Anders, 6530 Averøy (NO); REITAN, Knut Solstad, 7268 Titran (NO)
(74) Representative: Fluges patent as

(57) **Abstract**

Line tensioner (1) comprising a lower and upper frame (10, 20), first lower and upper pulleys (11,21) rotatably fixed to the lower and upper frames (10, 20) respectively, wherein the first lower and upper pulleys (11,21) are motor driven, the line tensioner (1) arranged to operate in a closed and an open position, wherein the closed position the first lower and upper pulleys (11,21) are vertically aligned and arranged to rotate in opposite directions to hold and tension a line (100), and wherein the open position the first upper pulley (21) is displaced upwards and axially relative the first lower pulley (11), the line tensioner (1) further comprising actuation means (30) arranged for reversely displacing the upper frame (20) relative the lower frame (10) to shift between the closed position and the open position of the line tensioner (1).

## Description

### Field of the invention

The present invention relates to the technical field of line tensioners, such as line tensioners for boats used when performing installation or maintenance work of e.g. mooring lines for off-shore fish farms. However, the line tensioner may also be used in other applications.

### Background art

For floating installations, such as floating fish farms, mooring is essential for the cages to withstand rough and changing environmental conditions. Moorings are required to hold cages against the forces generated by wind, currents and waves. Without proper mooring, the fish farms may collapse, leading to both short and long term serious economic and environmental consequences.

The mooring layout of the floating fish farm is a separate technological field, depending on the material and design of the cages, number and size of the cages and the environmental conditions in the area. This is not further considered here, but for implementation of this mooring layout and later maintenance, a good tool is required to allow mooring operations to be performed smoothly during various operating conditions from warm days with little wind to days of winter storms.

Typically anchors, risers and buoys of different kinds are used as fixed structures for mooring of the cages. The mooring lines have to be connected between these fixed structures and the cages. Sometimes, the mooring lines should be pre-tensioned.

According to prior art, a workboat run alongside and between the cages where the mooring operation takes place. Mooring lines are handled manually on the deck of the boat, but standard cranes and winches may be used to support the handling of the ropes.

Especially under rough environmental conditions, the working conditions on deck with moving rope and equipment poses a threat to the personnel on board the boat. The risk of becoming squeezed between ropes and boat, or to be injured by the machinery and heavy ropes is relatively high.

In addition, this type of mooring process is work intensive. The ropes have to be handled and tensioned at the same time as fixed to the buoys or risers. With the prior art technology, several persons have to be involved to be able to finalize the mooring operation.

Some prior art exists for handling of ropes and wires, but it is not directed to the same purpose as the invention.

International patent application WO2007117150 A1 discloses a device for a winch for pulling a riser in to a fixed or floating offshore installation, wherein an actuator-operated manipulator arm is attached to the winch. The manipulator arm is able to guide a wire with which the riser is hoisted up, the manipulator arm pulling the riser in a horizontal direction into the desired installation position once the riser has been hoisted up to the right height.

International patent application WO2013150281 A1, shows a drum assembly and a method of laying a line (L) onto a drum (D) uses an oscillator device to apply vibrations to the line as it is being wound onto the drum.

US patent 4846446 A, shows a rope tension damper device adapted to be installed, for example, on the deck of a ship at a location between the winch that controls the effective length of the rope and the fairlead that guides the rope so that it does not snag or tangle as it is wound and unwound from the winch.

US patent 4171640 A shows a tension measuring device providing an indication of the tension in a rope or cable and includes a rigid frame mounting first and second guide pulleys at opposite ends in tandem relationship. A central pulley is provided in the frame and the rope or cable is passed under the first guide pulley, over the central pulley and thence under the second guide pulley. A downward force is exerted on the central pulley which force in turn is measured by a load cell.

### Short summary of the invention

A main object of the present invention is to disclose a mooring support system that solves the problems described above for prior art.

The invention is a line tensioner comprising;
a lower frame, an upper frame, a first lower and a first upper pulley rotatably fixed to the lower and upper frames respectively, wherein the first lower and upper pulleys are motor driven, the line tensioner arranged to operate in a closed and an open position, wherein the closed position the first lower and upper pulleys are vertically aligned and arranged to rotate in opposite directions to hold and tension a line arranged between the first lower and upper pulleys, and wherein the open position the first upper pulley is displaced upwards and axially relative the first lower pulley, the line tensioner further comprising actuation means arranged for reversely displacing the upper frame relative the lower frame to shift between the closed position and the open position of the line tensioner.

The line tensioner has the advantage that the space above the first lower pulley is free when the tensioner is in the open position and the line can easily be lowered down on until it rests on the lower pulley.

Large and heavy lines are preferably handled by cranes. When a crane is used to grip and control the rope in combination with current invention, one will understand that the tensioning operation is simplified considerably compared to prior art where lines or ropes have to be manually inserted into, or connected to winches or similar equipment.

When the line is resting on the lower pulley, the line tensioner is moved to its closed position, and tensioning can start.

Further, when tensioning is finished the line tensioner can be opened again, and the line can be grabbed and lifted straight up by e.g. the crane.

Since no human interaction with the line is needed, the line tensioner according to the invention has the advantage that the tensioning operation does not represent any danger. Especially when used on board a boat, where lines and ropes to be tensioned have to be dragged onto and across the deck, the invention represents a large step forward in reduction of damages and injuries.

The invention according to the invention can be arranged with the pulleys outside a boat rail. Thus, the line can stay outside the boat for the entire tensioning process, further improving Health, Safety and Environment (HSE) for the operators of such boats.

### Figure captions

The attached figures illustrate some embodiments of the claimed invention.
Fig. 1 illustrates a left side view of the line tensioner in open position according to an embodiment of the invention.
Fig. 2 illustrates a front, right side perspective view of the line tensioner in closed position according to an embodiment of the invention.
Fig. 3 illustrates a front view of the line tensioner in open position according to an embodiment of the invention.
Fig. 4 illustrates a left side view of the line tensioner in closed position according to an embodiment of the invention.
Fig. 5 illustrates a front view of the line tensioner in closed and working position according to an embodiment of the invention.
Fig. 6 illustrates a rear view of the line tensioner in closed and parked position according to an embodiment of the invention.
Fig. 7 illustrates a left side view of the line tensioner in closed position according to an embodiment of the invention.
Fig. 8 illustrates a front view of the of the line tensioner in open position according to an embodiment of the invention.
Fig. 9 is a right side view of the line tensioner, illustrating a first embodiment of a line tensioner with adjustment means.
Fig. 10 is a partial enlarged sectional view of Fig. 10.
Fig. 11 is a partial front, left perspective view of the line tensioner, illustrating a second embodiment of the line tensioner with adjustment means.
Fig. 12 is a partial left side view of the line tensioner, illustrating the second embodiment of the line tensioner with adjustment means.

The arrow used in the drawings points in the forward direction of the line tensioner.

### Embodiments of the invention

The invention will in the following be described and embodiments of the invention will be explained with reference to the accompanying drawings.

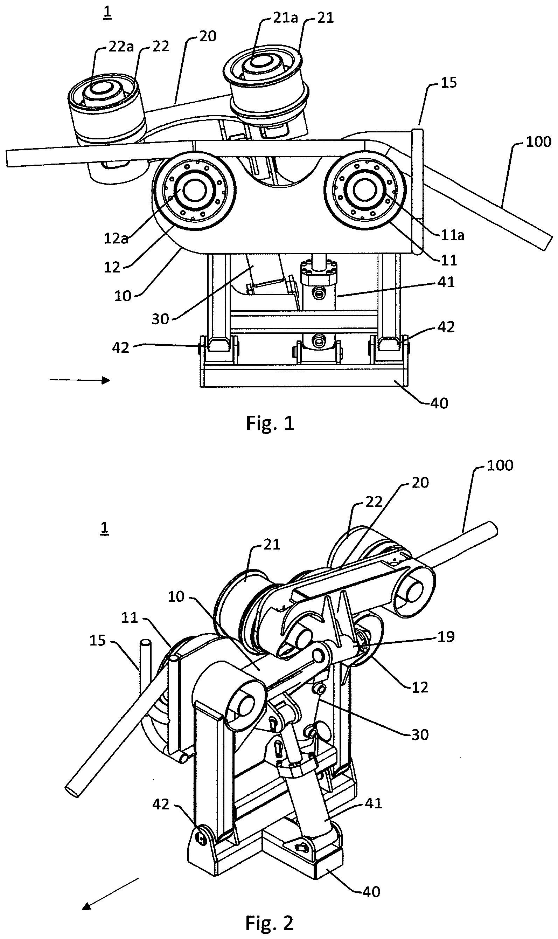

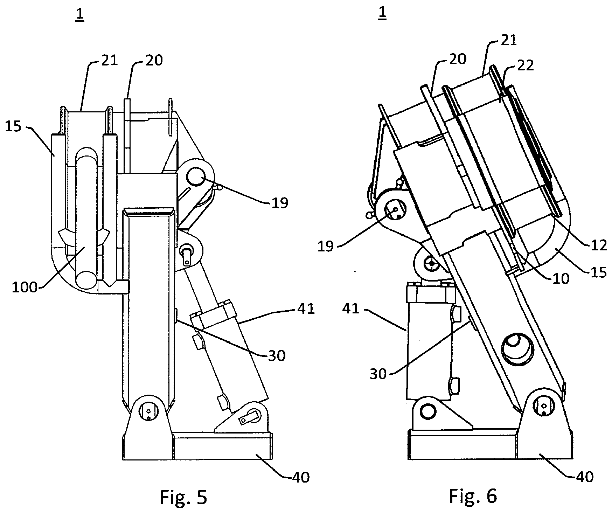

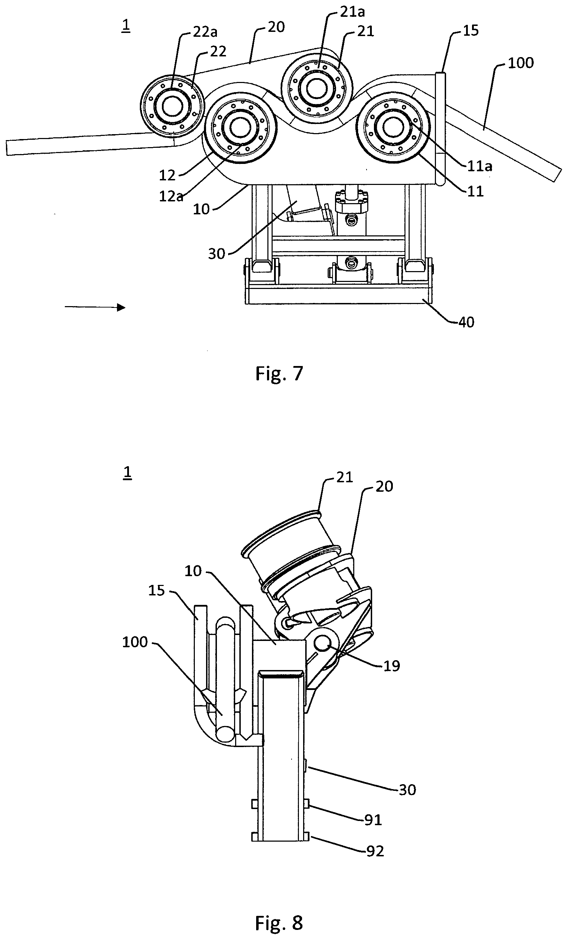

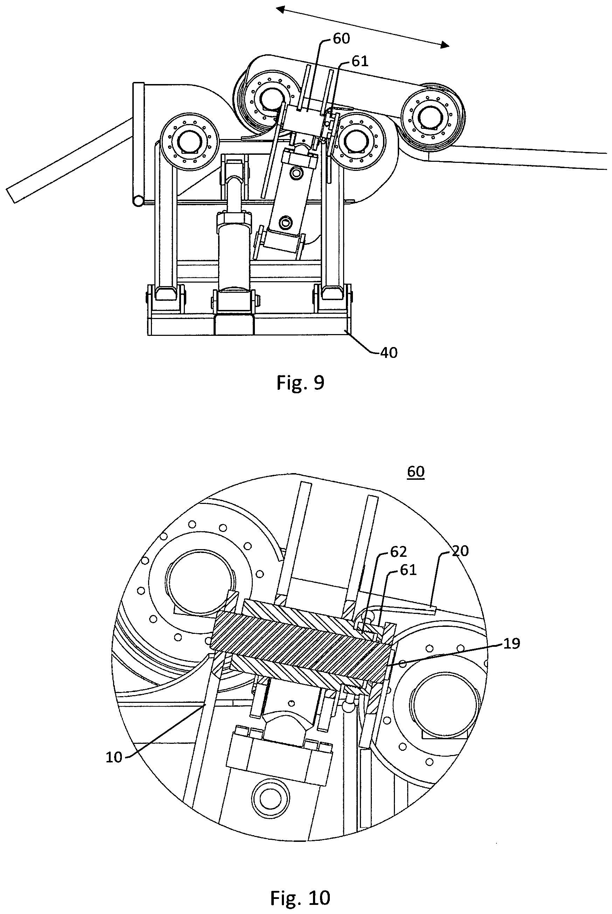

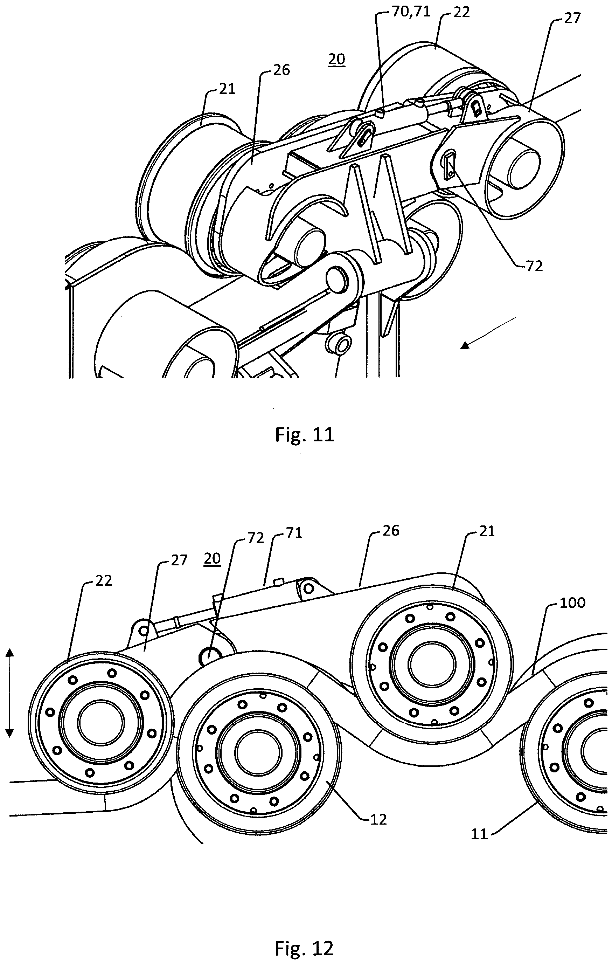

Figures 1, 2, 3, 4, 5, 6 and 7 illustrate a first embodiment of the invention, Figure 8 illustrate a second embodiment, Fig. 9 and 10 illustrate details of the first embodiment, and Fig. 11 and 12 details of a third embodiment.

However, the embodiments shown in the figures are specific combinations of a number of embodiments of the invention that is not restricted by the details presented by the figures. The specific embodiments, that are additional to the embodiments in the figures will therefore be explained separately below.

Common to all embodiments of the invention, and illustrated in Figure 1, 3 and 8 the line tensioner (1) can be in an open position, where the line (100) to be tensioned has been arranged above the first lower pulley (11) rotatably arranged on the lower frame (10), while the first upper pulley (21) rotatably arranged on the upper frame (20) is lifted up and sideways relative its position in the closed position and relative the first lower pulley (11). In the open position, the vertical space above the first lower pulley (11) is then free, and the line (100) can easily be lifted straight up, when loading it onto - or unloading it from the line tensioner (1).

Figures 2, 4, 5, 6, 7, 9, 10, 11 and 12 illustrates the line tensioner (1) in the closed position where the upper frame (20) with the first upper pulley (21) has been displaced to a position where the first upper pulley (21) is aligned with the first lower pulley (11). The upper frame (20) is displaced relative the lower frame (10) by the actuator (30) between the open position and the closed position.

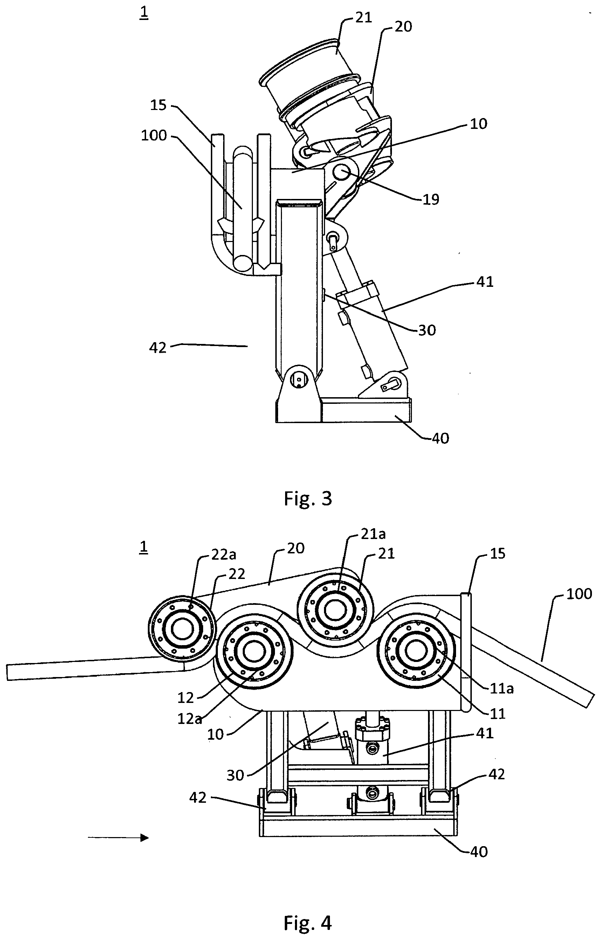

The first upper and lower pulleys (11, 21) are driven by motors (11a, 21a), and the line (100) can now be tensioned by operating the motors in opposite rotational directions. E.g. to tension the right side and loosen the left side of the line (100) in Fig. 4, the respective motors should operate the first upper pulley (21) in the clockwise direction, and the first lower pulley (11) in the counterclockwise direction. As will be understood, to tension the left side of the line and loosen the right side of the line, motors have to operate the pulleys in the opposite direction.

In an embodiment the line tensioner (1) comprises a hinge (19) joining the lower frame (10), and the upper frame (20), wherein the actuation means (30) is arranged for rotating the upper frame about the hinge (19).

In a further embodiment actuation means (30) is a two-way hydraulic cylinder interconnecting the lower and upper frames (10, 20).

In an embodiment that can be combined with any of the embodiments above, the line tensioner comprises a second lower pulley (12), rotatably fixed to the lower frame (10), and in line with the first lower pulley (11).

In an embodiment that can be combined with any of the embodiments above, the line tensioner (1) above comprises a second upper pulley (22), rotatably fixed to the upper frame (20) in line with the first upper pulley (21).

Thus the line tensioner according to the invention may comprise the following configuration of pulleys in different embodiments:
- first lower and upper pulleys (11, 21),
- first lower and upper pulleys (11, 21) and second lower pulley (12),
- first lower and upper pulleys (11, 21) and second upper pulley (22), and
- first lower and upper pulleys (11, 21) and second lower and upper pulleys (12, 22)

In addition to the first lower and upper pulleys (11, 21), one or both of the second lower and upper pulleys (12, 22) may also be motor driven.

The line tensioner (1) comprises two, three or four motors (11a, 21a, 12a, 22a) driving the first and second lower and upper pulleys (11, 21, 12, 22), respectively. The motors may be electric, hydraulic or any other type of motor suitable to rotate the respective pulleys.

The second upper pulley (22) contributes to the retention force of the line (100) as illustrated in e.g. in Fig. 4. When the line (100) is pulled from the right, the friction force of the first and second upper pulleys can be greatly increased by tensioning the line on the left side, i.e., by the second upper and lower pulley (12, 22). The retention force caused by the interaction of second lower and upper pulleys (12, 22) is a function of the angle of contact with the line. Thus, a larger angle of contact on the second upper pulley (22) will increase the friction force and correspondingly tension obtained from the first lower and upper pulleys (11, 21).

In an embodiment related to the last two embodiments listed above, where the line tensioner comprises at least first and second upper pulleys (21, 22), the line tensioner comprises a belt spanning the first and second upper pulleys (21, 22), wherein the first upper pulley (21) is arranged to rotate the belt.

The belt has the advantage that the upper frame (20) will obtain a larger contact surface with the upper side of the line (100), and the resulting frictional force increases. This will again lead to a larger pull force, if needed, or reduction of the downward force needed from the upper frame (10) needed to obtain the required grip.

In an embodiment the belt is flexible in the longitudinal direction to obtain a further increased friction.

In an embodiment that can be combined with any of the embodiments above, the line tensioner (1) comprises a line guide (15) fixed to the lower frame (10) and aligned with the first lower pulley (11), wherein the line guide (15) has an open top recess arranged to receive the line (100) from above. Thus, when the line tensioner (1) is in the open position, the line (100) can be lowered down, into the opening in the guide (15). With the line in the line guide (15) it is easy to align the line over the top of the first lower pulley (11). Preferably the recess is considerably deeper than the diameter of the line (100), ensuring that the line does not fall out of the line tensioner (1) at any time. The line guide (15) can be used in the same way in embodiments with both first and second lower pulleys (11, 12).

It is an important object of the invention to obtain sufficient friction between the pulleys and the line (100), with different types of lines, different operating conditions, such as different humidity and impurities as well as different required tension. Above, it has been described how a larger angle of contact on the second upper pulley (22) will increase friction and correspondingly tension obtained from the first lower and upper pulleys (11, 21).

In addition to the downward force obtained by lowering the upper frame (20) into the closed position, two different tension adjustment means may be used separately or in combination with each other, and also in combination with any of the embodiments above, where the line tensioner comprises at least first and second upper pulleys (21, 22).

The first of these embodiments comprises adjustment means (60) arranged to displace the upper frame (20) relative the lower frame (10) in a longitudinal direction of the first lower pulley (11) as illustrated in Fig. 9 and 10.

In a further related embodiment the adjustment means (60) comprises a threaded element (62) fixed to said upper frame (20) and a nut (61) as can be seen in the partial enlarged sectional view of. 10. In Fig. 10 the upper frame (20) is fixed to the threaded element (62), and the nut (61) is rotatably fixed to the lower frame (10). A common axle through both the threaded element (62) and the nut (61) takes the role as the frame hinge (19) pivot. Thus, when the nut (61) is screwed one or the other way, the longitudinal position of the threaded element (62) and the upper frame (20) will be altered. The longitudinal position of the first and second upper pulleys (21, 22) will then vary relative the position of the first lower pulley (11).

The arrow in Fig. 9 indicate the direction that the upper frame (20) can be displaced. The direction depends on the angle of the frame hinge (19) relative the lower frame (10).

The second embodiment of these embodiments comprises adjustment means (70) arranged to displace the second upper pulley (22) relative the first upper pulley (21) in a vertical direction as illustrated in the partial views of Fig. 11 and 12. Thus, the individual position of the first and second upper pulleys (21, 22) relative each other can be altered as indicated by the arrow in Fig. 12.

More specifically in a related embodiment the upper frame (20) comprises first and second frame elements (26, 27) joined by a hinge (72), wherein the first and second upper pulleys (21, 22) are fixed to respective first and second frame elements (26, 27), the adjustment means (70) comprising a two-way cylinder (71) connected in first and second ends to the first and second linked frame elements (26, 27), respectively.

To achieve a similar effect, other variants of adjustment means (70) may be used, such as e.g. a spring or combinations of springs and cylinders.

When the line tensioner (1) is used on the deck of a boat it has a number of advantages over prior art, as indicated previously. However, one remaining problem is that the protruding line tensioner may cause problems in certain situations, such as docking.

In an embodiment, as illustrated in e.g. Fig.1 and 2, that can be combined with any of the embodiments above, the line tensioner (1) comprises a base (40) arranged to be fixed to the deck of the boat, and a parking actuation means (41) arranged to reversibly retract the upper part of the lower frame (10) from a working position wherein the first lower pulley (11) is arranged to protrude outside a railing of the boat to a parking position wherein the first lower pulley (11) is arranged within the railing.

In a related embodiment the line tensioner (1), comprises a base hinge (42) joining the base (40), and the lower frame (41), wherein the parking actuation means (41) is arranged for rotating the lower frame (10) about the base hinge (42).

In a further related embodiment the parking actuation means (41) is a two-way hydraulic cylinder interconnecting the lower frame (10) and the base (40).

According to the invention, the line tensioner can also be parked inside the railing without the need for the base hinge (42) and the actuation means (41). In an embodiment the base (40) is fixed to the lower frame (10), wherein the base (40) is arranged to rotate about a vertical axis to turn the line tensioner about the vertical axis until it is inside the railing of the boat. The rotation point should be arranged inside the railing to obtain the desired effect. The base could in an embodiment be split in an upper and lower base such as a swivel, where the lower base is fixed to the deck of the boat, and the upper base is fixed to the lower frame (10), where the upper base is arranged to rotate relative the lower base.

The line tensioner (1) may be used in numerous applications. One such application is in combination with a crane on a vehicle or a boat. In this application the line tensioner as e.g. shown in the embodiment of Fig. 8 is attached to the end of the crane. Tracks (91, 92) extend from the lower frame (10), and corresponding grooves in corresponding attachment means in the end of the crane (not shown) is used for easy mounting of the line tensioner (1) to the crane. A spring tensioned locking device can be used for securing the line tensioner to the crane.

When the line tensioner is mounted to a pivotable crane, it can pick up lines to be tensioned without the need for further assistance from humans or other technical devices. The line tensioner in open position can be arranged with the first lower pulley (11) under the line, the line tensioner is then closed and tensioning can start. This can be performed both in water, in the air and on the ground, since a crane according to prior art can move the line tensioner in all required directions. In this configuration a parking actuator as described for the embodiments above is not necessary, since the line tensioner can be parked by maneuvering the crane.

This embodiment can be combined with all embodiments above that do not comprise the base (40).

In all the embodiments above, the material used in the pulleys and the belt should be selected to obtain the required friction for the type of line tensioned. In an embodiment the surface of the pulleys comprises polymeric material. The surface of the pulleys may also have different profiles for different applications, such as flat, U-groove, V-groove etc. In addition, the surface may be hard, semiflexible or flexible.

Although "line" is used throughout the document, the tensioner according to the invention may be used to tension different types of ropes, wires, cables, strings, threads, cords, lines etc.

In an embodiment the line tensioner (1) comprises an operator panel from where any of the motors (11a, 12a, 21a, 22a) and the actuation means (30, 41, 70) can be controlled. In an embodiment the operator panel comprises individual controls for each of the motors and actuation means, while in another embodiment the operator panel is connected to a control circuit arranged to provide functional control from the operator panel, with operator controls such as "tension", "loosen", "open", "close", "start", "stop" etc., where the control system is arranged to control multiple motors and actuation means based on single functional inputs from the control panel. The control circuits may be any combination of electric, hydraulic, optical etc.

In the hydraulic circuits overcenter valves or pressure relief valves can be used to prevent overload of the hydraulic, especially when the tensioner is used for mooring operations where marine organisms may grow on the lines, making the surface rough and uneven.

The line tensioner according to the invention may be used in different applications. One such application is installation or maintenance of cages in fish farms where the moorings or gridropes typically interconnect anchors with cages in a mooring grid. The line tensioner can be installed on the deck of a working boat or any type of floating vessel that can be used for this purpose.

Similar, but mirrored versions of the line tensioner may be advantageous in certain situations, such as when mounted on a boat deck.

The line tensioner may also be used for other types of tensioning work where one or more of the described advantages can be obtained.

## Claims

1. A line tensioner (1) comprising;
- a lower frame (10),
- an upper frame (20),
- a first lower and a first upper pulley (11,21) rotatably fixed to said lower and upper frames (10, 20) respectively, wherein said first lower and upper pulleys (11,21) are motor driven, said line tensioner (1) arranged to operate in a closed and an open position, wherein said closed position said first lower and upper pulleys (11,21) are vertically aligned and arranged to rotate in opposite directions to hold and tension a line (100) arranged between said first lower and upper pulleys (11,21), and wherein said open position said first upper pulley (21) is displaced upwards and axially relative said first lower pulley (11), said line tensioner (1) further comprising,
- actuation means (30) arranged for reversely displacing said upper frame (20) relative said lower frame (10) to shift between said closed position and said open position of said line tensioner (1).

2. The line tensioner (1) of claim 1, comprising a frame hinge (19) joining said lower frame (10), and said upper frame (20), wherein said actuation means (30) is arranged for rotating said upper frame about said frame hinge (19).

3. The line tensioner (1) of claim 2, wherein said actuation means (30) is a two-way hydraulic cylinder interconnecting said lower and upper frames (10, 20).

4. The line tensioner (1) of any of the claims 1 to 3, comprising a second lower pulley (12), rotatably fixed to said lower frame (10) in line with said first lower pulley (11).

5. The line tensioner (1) of any of the claims 1 to 4, comprising a second upper pulley (22), rotatably fixed to said upper frame (20) in line with said first upper pulley (21).

6. The line tensioner (1) of claim 5, comprising a belt spanning said first and second upper pulleys (21, 22), wherein said first upper pulley (21) is arranged to rotate said belt.

7. The line tensioner (1) according to any of the claims above, comprising a line guide (15) fixed to said lower frame (10) and aligned with said first lower pulley (11), wherein said line guide (15) has an open top recess arranged to receive said line (100) from above.

8. The line tensioner (1) according to any of the claims above, comprising adjustment means (60) arranged to displace said upper frame (20) relative said lower frame (10) in a longitudinal direction of said first lower pulley (11).

9. The line tensioner according to claim 8, wherein said adjustment means (60) comprises a threaded element (62) fixed to said upper frame (20), and a nut (61).

10. The line tensioner (1) according to any of the claims 1 to 7, comprising adjustment means (70) arranged to displace said second upper pulley (22) relative said first upper pulley (21) in a vertical direction.

11. The line tensioner (1) according to claim 10, wherein said upper frame (20) comprises first and second frame elements (26,27) joined by a hinge (72), wherein said first and second upper pulleys (21,22) are fixed to respective first and second frame elements (26, 27), said adjustment means (70) comprising a two-way cylinder (71) connected in first and second ends to said first and second linked frame elements (26, 27), respectively.

12. The line tensioner (1) according to any of said claims above, comprising a base (40) arranged to be fixed to said deck of said boat, and a parking actuation means (41) arranged to reversibly retract said upper part of said lower frame (10) from a working position wherein said first lower pulley (11) is arranged to protrude outside a railing of said boat to a parking position wherein said first lower pulley (11) is arranged within said railing.

13. The line tensioner (1) of claim 12, comprising a base hinge (42) joining said base (40), and said lower frame (41), wherein said parking actuation means (41) is arranged for rotating said lower frame about said base hinge (42).

14. The line tensioner (1) of claim 13, wherein said parking actuation means (41) is a two-way hydraulic cylinder interconnecting said lower frame (10) and said base (40).
